# EUROPEAN PATENT APPLICATION

(11) **EP 1 791 103 A2**
(43) Date of publication of application: **30.05.2007**
(21) Application number: 06255462.1
(22) Date of filing: 24.10.2006
(51) Int. Cl.: G09G 3/20

(54) **Image data processing apparatus and processing method**

(30) Priority: 28.11.2005 JP 2005342242
(71) Applicant: SONY CORPORATION, Tokyo 141 (JP)
(72) Inventor: Kosuga, Katsuya, Shinagawa-ku Tokyo 141 (JP)
(74) Representative: Horner, David Richard

(57) **Abstract**

An image data processing apparatus has: an image processing unit outputting image data for display; a compressing unit compressing the display image data; a decompressing unit to which the compression image data is supplied through a communication path and which decompresses the supplied compression image data; an image display unit displaying an image by the display image data from the decompressing unit; and a control unit controlling so as to reduce a clock frequency of the transmitted compression image data when a data amount of the compression image data is smaller than a set data amount by which the data can be reduced to a data amount in which a radiation interference can be permitted.

## Description

### BACKGROUND OF THE INVENTION

### Field of the Invention

The invention relates to an image data processing apparatus such as a digital camera, cellular phone, or the like having an image processing unit and an image display apparatus and relates to an image data processing method.

### Description of the Related Arts

A digital camera, a cellular phone with a camera, or the like has a small display apparatus such as LCD (Liquid Crystal Display) panel, organic EL (Electroluminescence: field emitting effect) panel, or the like. In recent years, the number of pixels of the display apparatus is increasing in association with a demand for high-definition of the display apparatus.

At present, for example, the display apparatus having a resolution similar to that of a QVGA (Quarter Video Graphics Array; 320 × 240 pixels) type is used. In this case, a communication rate of 46080000 BPS (bits per seconds) is necessary in order to display an image of 2 bytes per pixel for a display of 30 fps (frames per second). Assuming that communication between a signal processing unit and the display apparatus is made by an 8-bit bus, the communication based on clocks of 4608000 Hz is made on a flexible wiring board as a communication path.

When the display apparatus is made finer and the display apparatus of, for example, a VGA (Video Graphics Array; 640 × 480 pixels) type is presumed, the communication based on clocks of 18432000 Hz is necessary. If it is intended to suppress a clock frequency to a frequency similar to that of the QVGA, a bus width of 32 bits is necessary.

When the clock frequency rises as mentioned above, since an EMI (Electro-Magnetic Interference) increases, a countermeasure for radiation is necessary. For example, it is necessary to take such a countermeasure that the flexible wiring board is covered with an electromagnetic wave absorbing sheet, aluminum evaporated film (material obtained by evaporation depositing aluminum onto a PET) is adhered onto the flexible wiring board, the board is coated with a carbon paste, a signal is attenuated by ferrite beads, or the like.

Such countermeasures cause a problem of an increase in a setting space of the flexible wiring board or an increase in costs. The method of widening the bus width causes an increase in the number of pins of a system LSI (Large Scale Integrated Circuit), an increase in width of the flexible wiring board, and the like, so that there is a large demerit in terms of the space and the costs.

A system for reducing an amount of data to be transmitted to the display apparatus by a compressing technique in order to alleviate the above problem has been disclosed in Patent Document 1 (Official Gazette of Japanese Laid-Open Patent Application No. 2001-242846).

According to the image display system disclosed in Patent Document 1, in a computer main body, digital video data is compressed, the compressed data is transmitted to the display apparatus and decompressed therein, and a display is performed on the basis of the decompressed digital video data.

However, according to the system disclosed in Patent Document 1, a compression/decompression ratio is fixed and nothing is disclosed with respect to a point that a countermeasure for the EMI is effectively taken by controlling an information amount in accordance with the video data.

### SUMMARY OF THE INVENTION

Embodiments of the present invention provide an image data processing apparatus and a processing method in which in the case of compressing video data to a display unit, a clock frequency for transmitting the video data can be further reduced.

According to an embodiment of the present invention, there is provided an image data processing apparatus comprising:
an image processing unit outputting image data for display;
a compressing unit compressing the image data for display;
a decompressing unit which decompresses the supplied compression image data which is compressed by said compressing unit and supplied through a communication path;
an image display unit displaying an image on the basis of the image data for display from the decompressing unit; and
a control unit controlling so as to reduce a frequency of clocks of the compression image data which is transmitted through the communication path when a data amount of the compression image data is smaller than a set data amount in which a radiation interference can be reduced to a permissible amount of radiation interference or less.

According to another embodiment of the present invention, there is provided an image data processing method comprising:
an image processing step of outputting image data for display;
a compressing step of compressing the image data for display;
a decompressing step of receiving the compression image data compressed in the compressing step through a communication path and decompressing the received compression image data;
an image display step of displaying an image on the basis of the image data for display obtained in the decompressing step; and
a control step of controlling so as to reduce a frequency of clocks of the compression image data which is transmitted through the communication path when a data amount of the compression image data is smaller than a set data amount in which a radiation interference can be reduced to a permissible amount of radiation interference or less.

According to an embodiment of the invention, when the data amount is smaller than the set data amount due to the compression, the clock frequency of the compression image data which is transmitted through the communication path can be reduced. Thus, an amount of unnecessary radiation can be reduced and electric power consumption and a heat generation amount can be also decreased.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram showing a whole construction of an embodiment of the invention;
Fig. 2 is a schematic diagram showing an external appearance of an internal construction of the embodiment of the invention;
Fig. 3 is a block diagram showing a construction of a compressing unit in the embodiment of the invention;
Fig. 4 is a schematic diagram for use in explanation of control of a clock frequency in the embodiment of the invention;
Fig. 5 is a flowchart showing a flow of the control operation of the clock frequency and a quantization table in the embodiment of the invention;
Fig. 6 is a timing chart showing a flow of processes by a construction of the related art;
Fig. 7 is a timing chart showing a flow of a sequential process in the embodiment of the invention;
Fig. 8 is a timing chart showing a flow of a pipeline process in the embodiment of the invention; and
Fig. 9 is a timing chart showing a flow of a sequential process in which a communication time is reduced by a compressing process in the embodiment of the invention.

### DETAILED DESCRIPTION OF THE PREFERRED EMBODIMENT

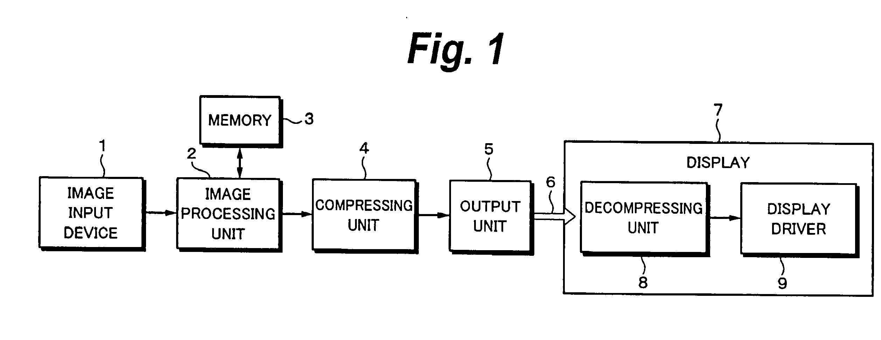

An embodiment of the invention will be described hereinbelow with reference to the drawings. Fig. 1 schematically shows a whole construction of an electronic apparatus such as a digital camera according to the embodiment. Reference numeral 1 denotes an image input device constructed by an image pickup device such as CCD (Charge Coupled Device), CMOS (Complementary Metal Oxide Semiconductor), or the like. A digital image pickup signal from the image input device 1 is supplied to an image processing unit 2.

In the image processing unit 2, arithmetic operations necessary for automatic focusing, automatic aperture control, and automatic white balance, signal processes for improving a resolution and a color reproducibility, and the like are executed. In the image processing unit 2, a compressing process of JPEG (Joint Photographic Experts Group) is also executed. The compressed data is stored into a memory 3 as a removable media. Image data for display is also outputted from the image processing unit 2. The image data for display is, for example, photographed image data in which the image pickup signal fetched by the image input device 1 has been processed in the image processing unit 2 or reproduction image data which has been read out of the memory 3 and decompressed in the image processing unit 2.

The image data for display is compressed by a compressing unit 4 and transmitted to a display apparatus 7 through an output unit 5 and a flexible wiring board 6 as a communication path. The display apparatus 7 has a display device such as LCD panel, organic EL panel, or the like. A display driver 9 is provided for the display device. The compression image data transmitted through the flexible wiring board 6 is decompressed by a decompressing unit 8. The decompressed image data is supplied to the display driver 9. An image adjustment such as gain control, y control, and the like is performed in the display driver 9.

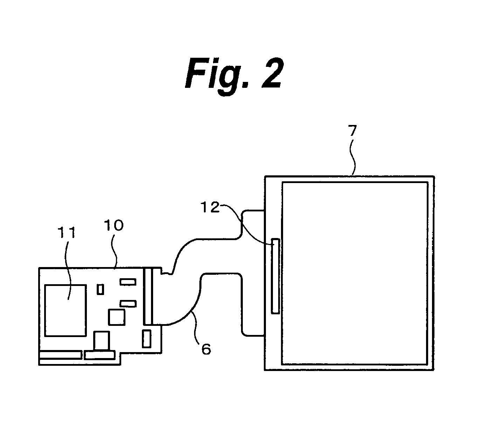

Fig. 2 shows a part of an external view of the embodiment. An IC chip 11, individual parts, and the like are mounted on a printed wiring board 10. For example, the IC chip 11 is a DSP constructing the image processing unit 2, compressing unit 4, and output unit 5. One end of the flexible wiring board 6 is connected to the printed wiring board 10 and the other end is connected to circuit parts 12 of the display 7. The circuit parts 12 include an IC chip constructing the decompressing unit 8 and the display driver 9, and the like.

The flexible wiring board 6 is a board having a flexibility in which a thin copper foil pattern is formed onto a thin film-shaped base made of polyimide, polyester, or the like and which is protected by being coated with an insulating film or the like. The flexible wiring board 6 can transmit data, for example, in an 8-bit parallel manner. The display 7 is, for example, a liquid crystal display (LCD) panel and is constructed by integratedly mounting the circuit parts of the decompressing unit 8 and the display driver 9 onto a glass plate or an organic material constructing the LCD panel. By arranging the printed wiring board 10 onto the lower side of the LCD panel, the LCD panel can be used as a shielding material, so that a process for newly providing the shielding material can be omitted.

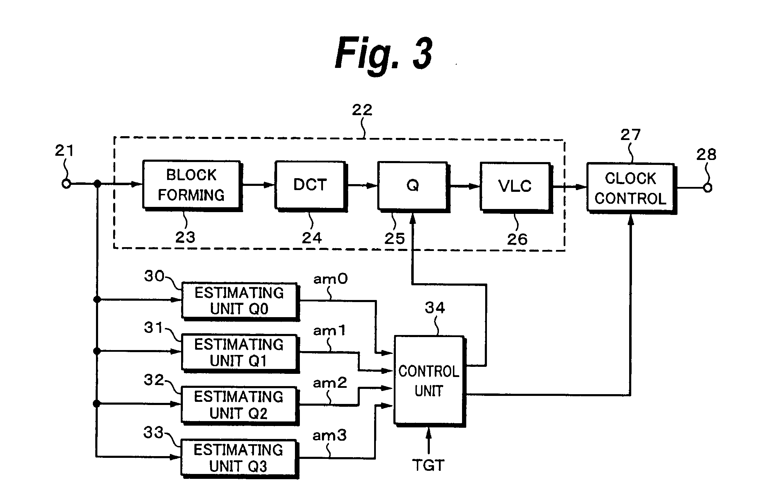

Fig. 3 shows an example of the compressing unit 4. For example, JPEG is used as a compressing method. Image data for display from an input terminal 21 is supplied to a block forming circuit 23 of a compressor 22. In the block forming circuit 23, one image is divided into blocks each of which is constructed by, for example, (8 × 8 pixels) and each block is supplied to a DCT (Discrete Cosine Transform) unit 24.

A coefficient of one DC component and coefficients of 63 AC components are generated by the DCT unit 24 in correspondence to the blocks. Those coefficient data is outputted by a zigzag scan starting from, for example, the coefficient data of the DC component and inputted to a quantizer 25. Quantizing characteristics of the quantizer 25 are controlled by a control signal CTL1 from a control unit 34. For example, a quantization matrix as a matrix of divisors for the (8 × 8) DC coefficients is specified by the control signal CTL1. The coefficient data is divided by the divisors of the quantization matrix and their quotients are rounded, so that a quantization output is obtained. An output of the quantizer 25 is encoded by a variable length encoder (VLC) 26 for performing entropy encoding.

The image data for display which has been compressed by the compressor 22 is outputted from the VLC 26 to a clock control unit 27. The clock control unit 27 controls a clock frequency of the data which is outputted from an output terminal 28 to the flexible wiring board 6 through the output unit 5 by a control signal CTL2 from the control unit 34. The clock frequency is a frequency of the clock synchronized with bits of the transmission data.

The image data from the input terminal 21 is inputted to estimating units 30 to 33. The estimating units 30 to 33 have a construction similar to that of the compressor 22 and execute the quantization by quantization matrices Q0, Q1, Q2, and Q3, respectively. The quantization matrix Q0 is set to the standard matrix which is ordinarily used. The quantization matrix Q1 is set so as to reduce a generation code amount more than that in the case of the quantization matrix Q0. Further, the quantization matrix Q2 is set so as to reduce the generation code amount more than that in the case of the quantization matrix Q1. The quantization matrix Q3 is set so as to reduce the generation code amount more than that in the case of the quantization matrix Q2.

A code amount am0 estimated by the estimating unit 30, a code amount am1 estimated by the estimating unit 31, a code amount am2 estimated by the estimating unit 32, and a code amount am3 estimated by the estimating unit 33 are supplied to the control unit 34. A set code amount TGT is inputted to the control unit 34. The control signals CTL1 and CTL2 according to the magnitude relation between each of the estimated code amounts am0 to am3 and the set code amount TGT are formed. The set code amount TGT is a data amount which has been set in such a manner that the radiation interference can be reduced to an amount of radiation interference which can be permitted or less when it is assumed that a clock frequency Fc is set to a highest clock frequency f4 and the compression image data is transmitted to the display 7 by the clock frequency f4.

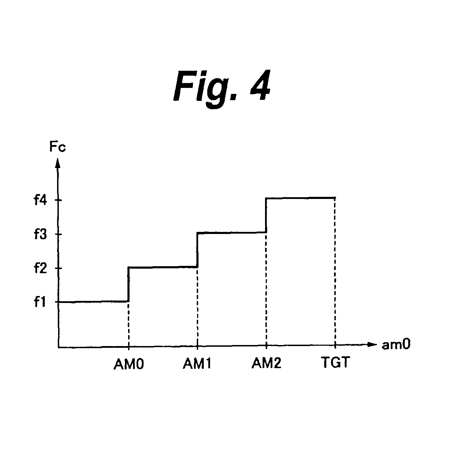

Fig. 4 is a diagram for explaining the control of the clock frequency Fc. If the generation code amount am0 of the compression image data which is generated by the compression encoding of the estimating unit 30 is equal to or less than the set code amount TGT, the clock frequency Fc is changed to a frequency lower than the frequency f4 in accordance with the generation code amount am0. Each of code amounts AM0, AM1, AM2, and AM3 is a threshold value which is used to discriminate whether or not the clock frequency is switched and they are set so as to satisfy the relation of (AM0 < AM1 < AM2 < TGT). For example, f4, f3, f2, and f1 (f4 > f3 > f2 > f1) are prepared as a clock frequency Fc. All of those clock frequencies are selectively set to a frequency at which the compression image data can be transmitted to the display 7 for a predetermined period of time, for example, a one-frame period of time.

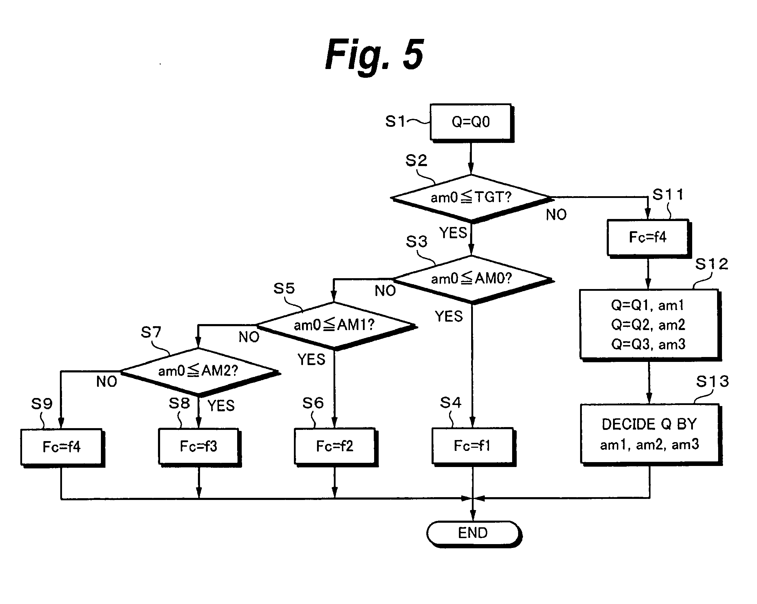

The control of the clock frequency and the quantization table which is made by the control unit 34 in the embodiment of the invention will now be described with reference to a flowchart of Fig. 5. In step S1, the quantization table Q is initially set to Q0. The estimating unit 30 outputs the code amount am0 in the case where the quantization table Q0 is used.

In step S2, whether or not the estimated code amount am0 is equal to or less than the set code amount TGT is discriminated. If it is equal to or less than the set code amount TGT, the quantization table Q is not changed but the code amount am0 is compared with the minimum threshold value AM0 and whether or not (am0 ≤ AM0) is discriminated in step S3. If affirmative, the control signal CTL2 to set the clock frequencies Fc to f1 is supplied to the clock control unit 27 in step S4.

If the code amount am0 is larger than the threshold value AM0 in step S3, the code amount am0 is compared with the threshold value AM1 and whether or not (am0 ≤ AM1) is discriminated in step S5. If affirmative, the control signal CTL2 to set the clock frequencies Fc to f2 is supplied to the clock control unit 27 in step S6.

If the code amount am0 is larger than the threshold value AM1 in step S5, the code amount am0 is compared with the threshold value AM2 and whether or not (am0 ≤ AM2) is discriminated in step S7. If affirmative, the control signal CTL2 to set the clock frequencies Fc to f3 is supplied to the clock control unit 27 in step S8.

If the code amount am0 is larger than the threshold value AM2 in step S7, the control signal CTL2 to set the clock frequencies Fc to f4 is supplied to the clock control unit 27 in step S9.

By the foregoing processes, if the code amount am0 in the case of using the standard quantization matrix Q0 is equal to or less than the set code amount TGT, the clock frequency can be reduced to the frequency lower than f4 in accordance with the amount of codes which are generated. By reducing the clock frequency, the interference by the radiation can be decreased. Although the clock frequency has been switched to four levels in the above description, it may be switched to the different number of levels or may be continuously changed.

If it is determined in step S2 that the code amount am0 is larger than the set code amount TGT, the clock frequency Fc is set to f4 in step S11. Code amount control processes in steps S12 and S13 are executed in the state where the clock frequency Fc has been fixed to f4.

In step S12, the code amounts am1, am2, and am3 estimated by the estimating units 31, 32, and 33 are inputted to the control unit 34, respectively. In step S13, the proper quantization matrix is selected on the basis of the code amounts am1, am2, and am3. As for the quantization matrix Q0, the quantization matrices Q1, Q2, and Q3 are set so that the generation code amount decreases monotonously in this order.

Therefore, if the relation of the code amount am1 ≤ the set code amount TGT is satisfied, it is determined that the quantization matrix Q1 is used. The control signal CTL1 to instruct the quantizer 25 of the compressor 22 to execute the quantization by using the quantization matrix Q1 is outputted. It is possible to use either a construction in which the compressor 22 has the plurality of the quantization matrices Q0 to Q3 and one of the quantization matrices is selected by the control signal CTL1 or a construction in which the selected quantization matrix is supplied from the control unit 34 to the quantizer 25.

If the code amount am1 > the set code amount TGT, whether or not the relation of the code amount am2 ≤ the set code amount TGT is satisfied is discriminated. If such a relation is satisfied, the quantization is executed in the quantizer 25 of the compressor 22 by using the quantization matrix Q2. Further, if the code amount am2 > the set code amount TGT, the quantization is executed in the quantizer 25 of the compressor 22 by using the quantization matrix Q3. The code amount am3 at the time of using the quantization matrix Q3 is set to be fairly small. In the ordinary case, the quantization matrix Q3 is set so as not to cause the relation of the code amount am3 > the set code amount TGT.

As mentioned above, in the embodiment of the invention, when the code amount obtained as a result of the compression executed by the compressor 22 is smaller than the set code amount, a process for reducing the clock frequency by which the compression image data is transmitted to the display 7 is executed. By reducing the clock frequency, the unnecessary radiation which is generated can be decreased, so that the interference which is exerted to another circuit can be reduced. Since the clock frequency is decreased, such an advantage that the electric power consumption and the generation heat amount can be reduced is obtained.

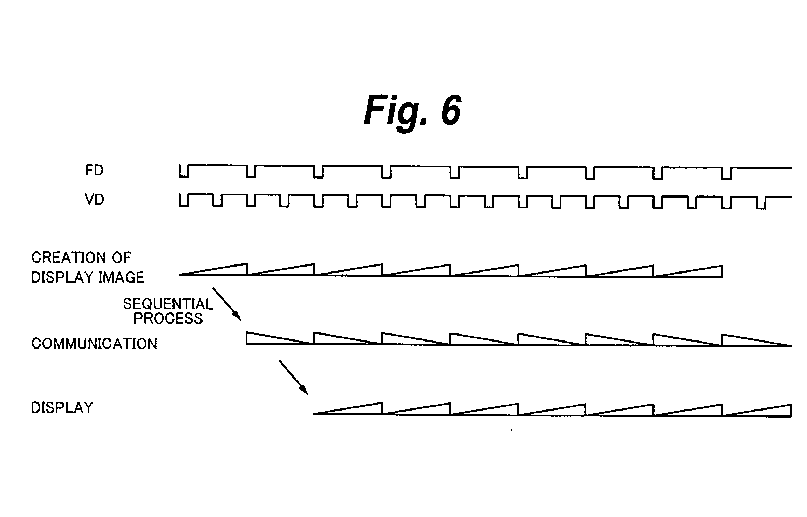

A time-dependent flow of the processes in the embodiment of the invention will now be described. First, Fig. 6 shows timing for processes in the case which is not accompanied with the compressing and decompressing processes, that is, for the processes in the related art. In Fig. 6, FD denotes a frame sync signal and VD indicates a field sync signal. In the related art, when the display image is formed, a communicating process for transmitting the formed display image to the display is executed. The received image is displayed on the display. In this manner, the forming process of the display image, the communicating process, and the displaying process are sequentially executed at the timing of every frame.

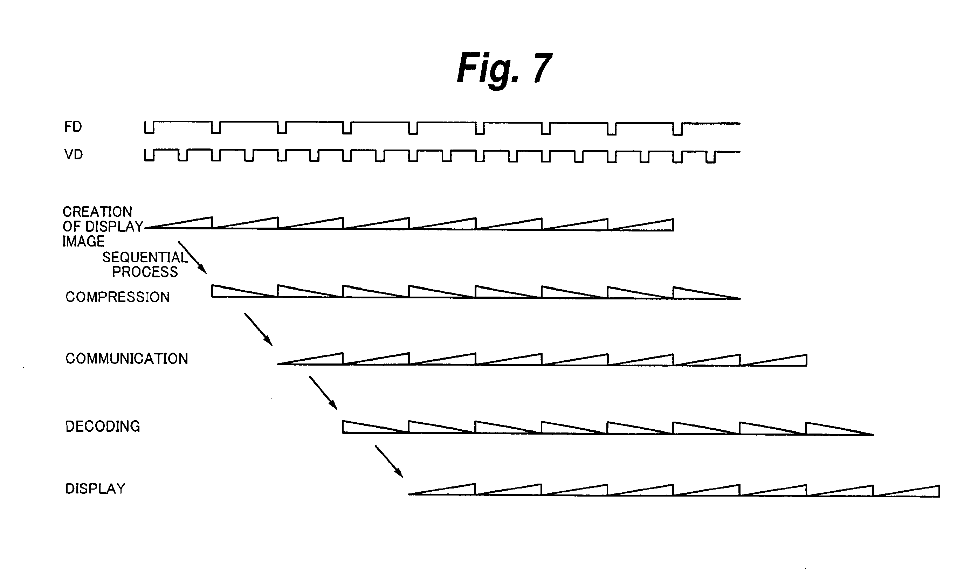

Fig. 7 shows an example of a sequential process in the embodiment of the invention. The display image of one frame is formed, the formed display image is compressed for a one-frame period of time, and the compression image data is transmitted to the display. The data is decoded (decompressed) and the image obtained after the decompression is displayed on the display. The forming process of the display image, the communicating process, and the displaying process are sequentially executed at the timing of every frame in a manner similar to the processes shown in Fig. 6.

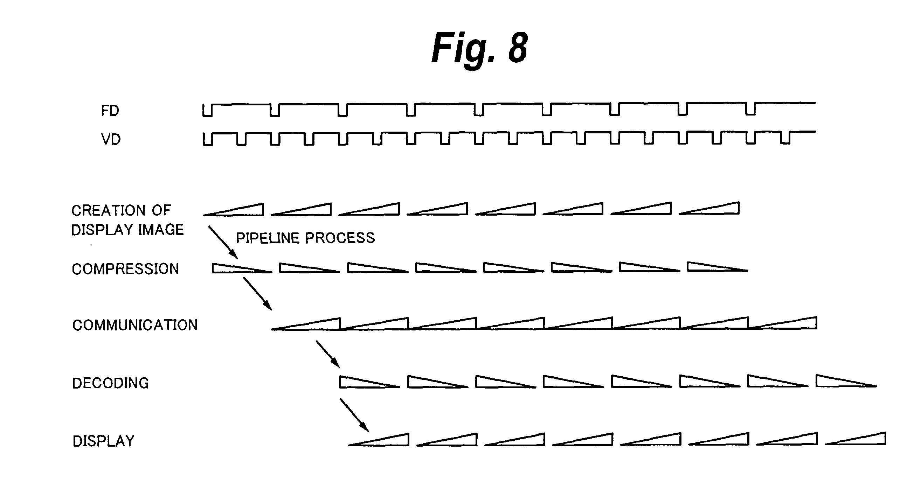

Fig. 8 shows an example of a pipeline process in the embodiment of the invention. The display image of one frame is formed and the formed display image is compressed from the portion where the display image has been formed. The communicating process, the decompressing process, and the displaying process are also similarly executed by the pipeline process from the portion where the display image has been formed.

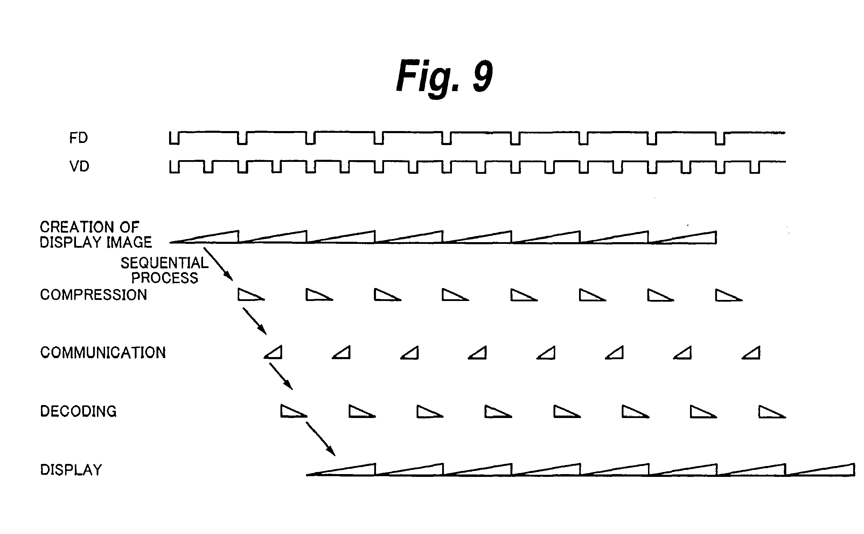

Fig. 9 shows an example of executing the sequential process in the embodiment of the invention. The formed display image of one frame is reduced to an amount of data which can be transmitted for a one-field period of time by the compressing process. Therefore, the communication can be made for the one-field period of time and the communicating time can be shortened. The radiation interference can be reduced by the reduction in communicating time.

The invention is not limited to the foregoing embodiment of the invention but many modifications and applications are possible within the scope without departing from the spirit of the invention. For example, an encoding method other than JPEG can be used for the compression encoding. The invention can be also applied to an image viewer for displaying image data stored in a memory or the like without using the image pickup device.

The present invention contains subject matter related to Japanese Patent Application JP 2005-342242 filed in the Japanese Patent Office on NOVEMBER 28, 2005, the entire contents of which being incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An image data processing apparatus comprising:
an image processing unit configured to output image data for display;
a compressing unit configured to compress said image data for display;
a decompressing unit configured to decompress the compression image data which is compressed by said compressing unit and supplied through a communication path;
an image display unit configured to display an image on the basis of the image data for display from said decompressing unit; and
a control unit configured to control so as to reduce a frequency of clocks of said compression image data which is transmitted through said communication path when a data amount of the compression image data is smaller than a set data amount in which a radiation interference can be reduced to a permissible amount of radiation interference or less.

2. An apparatus according to claim 1, further comprising an image input unit configured to supply the image data to said image processing unit.

3. An apparatus according to claim 1, wherein a compression ratio in said compressing unit is set to be higher when the data amount of said compression image data is larger than said set data amount.

4. An apparatus according to claim 1, wherein
said communication path is a flexible wiring board, and
said decompressing unit is provided integratedly with said image display unit.

5. An image data processing method comprising:
an image processing step of outputting image data for display;
a compressing step of compressing said image data for display;
a decompressing step of receiving the compression image data compressed in said compressing step through a communication path and decompressing the received compression image data;
an image display step of displaying an image on the basis of the image data for display obtained in said decompressing step; and
a control step of controlling so as to reduce a frequency of clocks of said compression image data which is transmitted through said communication path when a data amount of the compression image data is smaller than a set data amount in which a radiation interference can be reduced to a permissible amount of radiation interference or less.

6. A method according to claim 5, further comprising an image input step of supplying the image data to be processed in said image processing step.

7. A method according to claim 5, wherein a compression ratio in said compressing step is set to be higher when the data amount of said compression image data is larger than said set data amount.
